# FASCICULE DE BREVET EUROPEEN

(11) **EP 2 981 852 B1**
(45) Date de publication et mention de la délivrance du brevet: **07.06.2017**
(21) Numéro de dépôt: 14722254.1
(22) Date de dépôt: 02.04.2014
(51) Int. Cl.: G01V 99/00

(54) **MÉTHODE DE DÉTERMINATION D'UN MODÈLE CALÉ POUR UN RÉSERVOIR SOUTERRAIN DE FLUIDE**
VERFAHREN ZUM DEFINIEREN EINES KALIBRIERTEN MODELLS FÜR EIN UNTERIRDISCHES FLÜSSIGKEITSRESERVOIR
METHOD FOR DEFINING A CALIBRATED MODEL FOR AN UNDERGROUND FLUID RESERVOIR

(30) Priorité: 05.04.2013 FR 1353066
(43) Date de publication de la demande: 10.02.2016
(73) Titulaire: Storengy, 92270 Bois-Colombes (FR)
(72) Inventeur: HUGUET, Frédéric, F-95470 Fosses (FR)
(74) Mandataire: Underwood, Nicolas Patrick
(86) Numéro de dépôt international: PCT/FR2014/050782
(87) Numéro de publication internationale: WO 2014/162095

(56) Documents cités:
- GB-A- 2 345 776
- US-A1- 2008 234 988
- US-A1- 2011 308 792
- US-A1- 2012 232 865
- DARIO GRANA ET AL: "Quantitative log interpretation and uncertainty propagation of petrophysical properties and facies classification from rock-physics modeling and formation evaluation analysis", GEOPHYSICS, SOCIETY OF EXPLORATION GEOPHYSICISTS, US, vol. 77, no. 3, 1 mai 2012 (2012-05-01), pages WA45-WA63, XP001575529, ISSN: 0016-8033, DOI: 10.1190/GEO2011-0272.1 [extrait le 2012-04-30]

## Description

### Domaine technique

La présente divulgation s'inscrit dans les domaines de l'exploration et de l'exploitation des réservoirs de fluides compressibles, notamment des hydrocarbures. Le réservoir peut être un gisement naturel en milieu poreux, un gisement de gaz de schiste (« shale gas ») ou un stockage artificiel comme par exemple des stockages en aquifères ou en gisements déplétés.

L'exploitation d'un tel réservoir nécessite d'être capable de prévoir son fonctionnement et ses performances futures, en termes de volumes ou de débits.

Or les connaissances de la structure du réservoir et de son comportement vis-à-vis du fluide sont limitées. Elles proviennent, dans un premier temps, de forages réalisés en nombre limité et de données d'imagerie sismique, qui n'offrent qu'une connaissance partielle du réservoir. Dans un deuxième temps, elles proviennent de mesures de production réalisées par des puits d'exploitation ou de surveillance du réservoir, telles le débit de fluide, la pression du réservoir, la production d'eau ou la position des interfaces des fluides.

Pour appréhender et modéliser le réservoir, les géologues peuvent utiliser des cartes de propriétés, représentant par exemple dans un plan horizontal une propriété telle que la profondeur du réservoir, son épaisseur, sa porosité ou sa perméabilité. Chaque carte présente alors une unique propriété, représentée par une intensité de gris ou un code couleur. Pour rendre compte des différents aspects du réservoir, un modèle composé de plusieurs cartes représentant chacune une propriété locale différente, ainsi que d'autres paramètres représentant des propriétés globales sont utilisés.

Dans le cas d'un réservoir à symétrie de révolution autour d'un axe vertical - on parle de géométrie radiale - il est possible d'utiliser des graphiques présentant, en fonction de la coordonnée radiale, plusieurs propriétés, comme par exemple l'épaisseur, la porosité et la perméabilité. Ces informations peuvent être représentées par des courbes, ou des codes couleur ou des intensités de gris. Dans les deux cas, que l'on utilise un graphique dans le cadre d'une modélisation radiale, ou une carte à deux dimensions, la ou les représentations graphiques utilisées, constituent, avec éventuellement d'autres paramètres numériques non figurés sur la représentation graphique, un modèle du réservoir.

Le modèle de réservoir doit faire l'objet d'un processus de calage au vu des mesures de production. Cela implique de modifier les paramètres numériques ainsi que les cartes ou graphiques, en partant de réalisations envisageables, mais naturellement, plus le modèle est sophistiqué, plus le nombre d'éléments à optimiser est élevé, et plus délicate est l'opération de calage, à la fois à cause du temps et des moyens de calcul nécessaires et des risques d'absence de convergence ou de convergence vers une solution erronée.

On connait par exemple une méthode, décrite dans le document WO2004/086280, pour former un modèle par une sélection de réalisations et des déformations graduelles. Cette méthode ne permet pas, aux différentes étapes de sélection, un contrôle du géologue, et est donc susceptible, dans certaines situations, de mener à des solutions non réalistes. Dans le document US2012/0232865 A, on forme une bibliothèque de réalisations stochastiques d'un réservoir, on mappe ces réalisations dans une espace de caractéristiques et on classe les résultats d'une simulation physique pour les réalisations représentatives de chaque classe.

### Définition de l'invention et avantages associés

Pour surmonter ces difficultés et obtenir des avantages qui apparaîtront dans la présente divulgation, il est proposé une méthode selon la revendication 1. Grâce à ces caractéristiques, on permet un contrôle par le praticien de la validité du modèle calé au cours du processus, ainsi qu'une amélioration de la convergence l'optimisation étant menée sur l'espace des classes, qui est de plus faible dimension que celui des modèles ou des représentations graphiques, tout en offrant la possibilité au praticien d'intégrer dans le processus des représentations graphiques d'origine variées. Eventuellement, la méthode comprend de plus une étape d'extraction d'un attribut pour des représentations graphiques de la bibliothèque, la classification étant faite sur la base d'au moins l'attribut.

Les principes divulgués vont maintenant être décrits en relation avec des figures dont la liste est donnée ci-après.

### Liste des figures

La figure 1 représente un stockage de gaz naturel.
La figure 2 présente une carte telle qu'utilisée dans un exemple de réalisation.
La figure 3 présente les principales étapes d'un exemple.
La figure 4 présente un aspect d'un autre exemple.
La figure 5 présente un graphique tel qu'utilisé dans un autre exemple.
La figure 6 présente un aspect d'un exemple utilisant le graphique de la figure 5.
La figure 7 présente un autre exemple.
La figure 8 présente encore un autre exemple.

### Description détaillée de l'invention

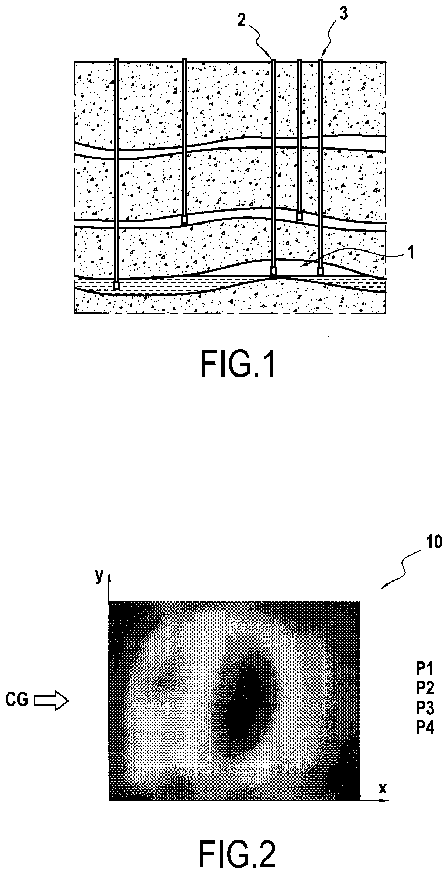

En **figure 1****,** on a représenté un stockage constituant un réservoir auquel on s'intéresse dans la présente divulgation. Il comprend un réservoir 1, et on a figuré le puits de gisement 2, qui permet, via un manifold, de mesurer une pression de gisement, ainsi que le puits d'exploitation 3, par lequel circule un fluide, entrant ou sortant. La structure interne et les propriétés internes du réservoir ne sont pas connues, puisque seules quelques informations, comme évoqué plus haut, sont disponibles pour le géologue.

En **figure 2****,** on a représenté une représentation graphique, ici une carte 10 constituant, avec quelques paramètres P1, P2, P3 et P4, une réalisation possible du réservoir 1. La carte 10 est un diagramme représentant un plan x,y de coupe horizontal, et figure une propriété du réservoir, par un code couleur appliqué en chaque point. La propriété, dans l'exemple choisi est la porosité, mais la perméabilité, la hauteur, le faciès géologique ou la profondeur pourraient, par exemple être choisis.

La carte est ici générée de manière automatique, par ordinateur, sans intervention d'un spécialiste géologue, pour avoir un niveau minimal de compatibilité avec les connaissances géologiques CG disponibles au sujet du réservoir 1.

Elle est obtenue par simulation géostatistique, par modélisation stochastique non géostatistique, ou par interprétation déterministe.

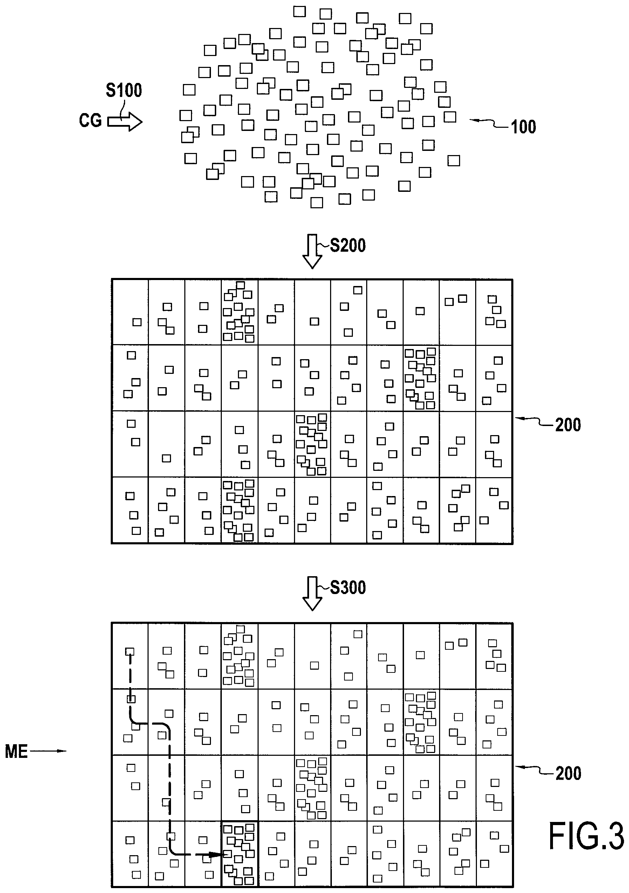

En **figure 3****,** on a figuré un schéma représentant les étapes d'un exemple de mise en oeuvre de l'invention.

Sur la base de connaissances géologiques CG d'un réservoir, une bibliothèque 100 formée d'un grand nombre de cartes du réservoir est générée, par ordinateur au cours d'une étape S100. Au sein de la bibliothèque, les cartes sont obtenues, toutes, par simulations géostatistiques, toutes par modélisation stochastique non géostatistique ou toutes par interprétation déterministe ou encore, certaines par une première de ces méthodes et d'autres par une deuxième de ces méthodes, et éventuellement encore certaines par la troisième de ces familles de méthodes. Chaque carte de la bibliothèque 100 présente une même propriété du réservoir en chaque point. La propriété, dans l'exemple choisi, est la porosité.

Chaque carte diffère des autres cartes de la bibliothèque, car elles ont été générées en utilisant des simulations géostatistiques distinctes. Elles respectent néanmoins *toutes, a minima,* les connaissances géologiques CG disponibles pour le réservoir.

Chaque carte peut être rapportée à un ou plusieurs attributs calculés à partir de la carte ou extraits de celle-ci. Ainsi, pour des cartes de profondeur, la surface, la forme ou le volume de la surface fermée, extraits de la carte, peuvent être utilisés comme attribut pour la réalisation. Pour d'autres cartes ou pour les mêmes cartes de profondeur, un vecteur constitué des valeurs de la propriété représentée aux noeuds d'une grille peut être utilisé comme attribut de carte.

Au cours d'une étape S200, des classes de cartes sont définies et les réalisations de la bibliothèque 100 sont classées dans ces classes. Les classes sont repérées par deux indices qui sont des nombres entiers i et j, et on peut donc représenter l'ensemble des classes, organisé, sous la forme d'un tableau à deux entrées, de dimensions n et m. Toutes les cartes sont reliées à une classe, ce qui, sur la figure est représenté par leur placement dans des cases ordonnées en deux dimensions figurant les classes. L'étape de classification S200 est effectuée avec une technique de classification topologique auto-organisatrice telle que les cartes auto-organisatrices de Kohonen (SOM pour « Self organizing map » en anglais) ou GTM (« Generative Topographic Maping » en anglais). Grâce à cette méthode, une distance peut être calculée entre chaque classe, sur la base, dans le cas présenté ici, des indices i et j.

Les classes sont organisées sur au moins une dimension, et ici, elles le sont sur deux dimensions. Elles peuvent l'être sur plus de deux dimensions.

Dans chaque classe, une carte représentative est déterminée. Il peut s'agir de l'une des cartes classées dans la classe, par exemple celle qui est la plus proche d'un barycentre des cartes de la classe, ou d'une carte déterminée sur la base des cartes de la classe, comme par exemple une carte moyenne, calculée sur l'ensemble des cartes de la classe, ou sur une sélection de celles-ci, les cartes les plus éloignées du barycentre étant écartées pour le calcul de la carte moyenne.

A ce stade, une visualisation à l'écran des cartes représentatives pour les n fois m classes permet à un géologue d'écarter des classes qui ne seraient pas réalistes au vu de l'expérience du praticien, portant sur les propriétés courantes des réservoirs, ou les propriétés particulières du réservoir étudié. Les classes écartées sont remplacées à l'aide d'une nouvelle application de la méthode de classification S200, sur une bibliothèque comprenant toutes les cartes initiales, à l'exception des cartes de la classe supprimée. Les classes sont donc refondées, les cartes non éliminées redistribuées dans des nouvelles classes et une nouvelle visualisation à l'écran permet au géologue de juger de la pertinence des cartes représentatives des classes qui lui sont proposées, jusqu'à ce que chacune d'entre elles soit raisonnablement réaliste et puisse être conservée pour l'étape suivante.

Au cours d'une étape S300, une fonction objectif, calculée pour chaque classe à l'aide de la carte représentative correspondante est optimisée dans l'espace des classes, c'est-à-dire l'espace des couples i,j.

La méthode d'optimisation peut utiliser comme variable les coordonnées entières et discrètes de classes dans l'espace i,j. Mais dans une variante, il est prévu de déterminer des cartes intermédiaires entre plusieurs classes voisines de l'espace i,j, de manière continue, les cartes intermédiaires étant obtenues par interpolation des cartes voisines avec différentes pondérations, choisies pour optimiser au final la fonction objectif.

La fonction objectif est construite de manière à mesurer la qualité du calage, c'est-à-dire la capacité de la carte choisie, qui est appelée à constituer le modèle ou un élément du modèle de réservoir, à rendre compte des mesures d'exploitation ME, comme la pression dans les puits en fonction du temps ou le débit d'eau aux puits en fonction du temps. La fonction objectif est optimisée dans un processus mis en oeuvre par un solveur, qui prend notamment en compte la qualité de reproduction des bilans de matière constatés au cours de l'exploitation du réservoir. Différentes méthodes d'optimisation numérique peuvent être mises en oeuvre.

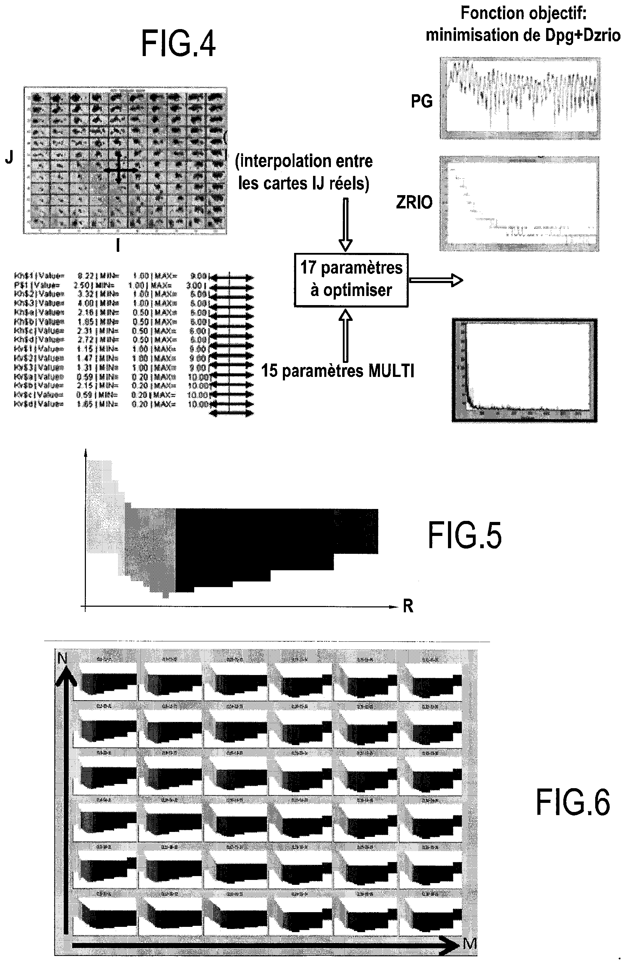

Dans une variante, la fonction objectif est calculée, non plus seulement sur les variables i,j mais aussi sur les valeurs qui peuvent être prises par un ou plusieurs paramètres P1, P2, P3 ou P4 tels qu'évoqués en relation avec la figure 2. Cette variante est représentée en **figure 4****,** où la fonction objectif est calculée sur la base de 15 paramètres qui sont des nombres réels indépendants des cartes c'est à dire non dépendants directement des cartes, et des coordonnées i,j des classes de cartes organisées comme présenté plus haut. La fonction objectif est la minimisation de la somme de deux fonctions, à savoir Dpg et Dzrio. Ainsi, la fonction objectif est minimisée sur 17 paramètres.

En **figure 5****,** on a figuré la représentation graphique d'un modèle radial, comme évoqué plus haut. Il s'agit d'un graphique, où l'axe des abscisses présente la coordonnée radiale autour d'un axe vertical, le réservoir étant considéré posséder une géométrie de révolution autour de cet axe. Diverses informations sont présentées sur ce graphique, par des courbes et des codes couleur.

On peut utiliser des cartes en coordonnées polaires (rayon azimuth).

En **figure 6****,** on a représenté une classification d'une bibliothèque de graphiques tels que présentés en figure 5. On ne présente ici, par simplification, pour chaque classe, qu'un seul graphique représentatif, choisi ou calculé comme présenté plus haut pour les cartes représentatives de classes. Mais comme précédemment, chaque classe comprend de nombreux graphiques. Les classes sont organisées suivant deux axes, et on peut calculer une distance entre deux classes, à l'aide des coordonnées de la classe sur les deux axes.

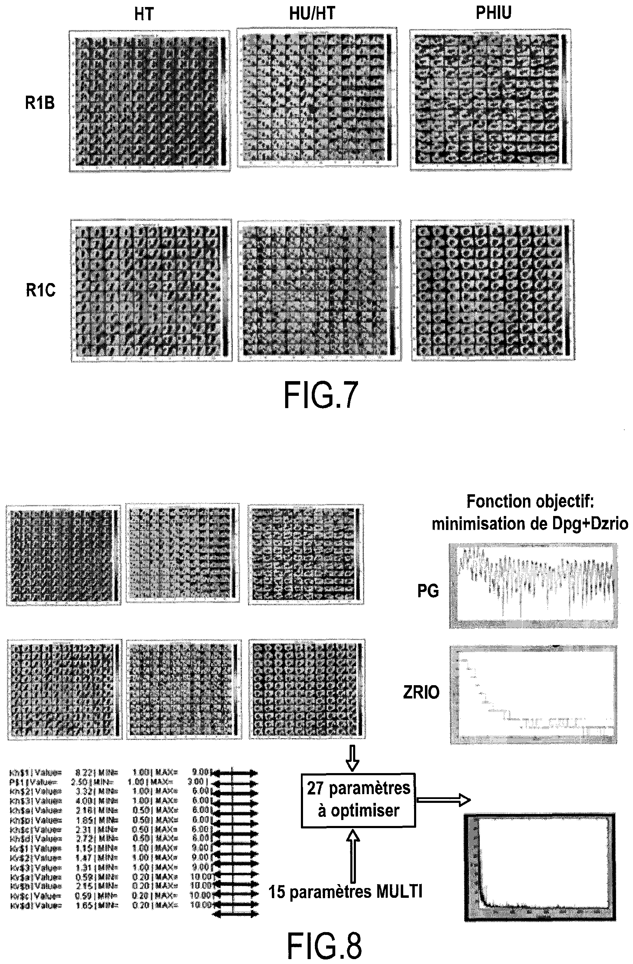

En **figure 7****,** on a représenté un aspect d'une variante de mise en oeuvre impliquant plusieurs cartes de propriétés comme celle représentée en figure 2. Dans cet exemple, on génère indépendamment plusieurs bibliothèques de cartes, les cartes de chaque bibliothèque présentant une propriété donnée. On effectue, indépendamment, des classifications de chaque bibliothèque ordonnées sur deux dimensions puis le géologue peut visualiser les cartes représentatives des classes, présentées sur deux dimensions. Ainsi, on a présenté en figure 7, les cartes représentatives des classes ordonnées pour une bibliothèque de cartes de la propriété HT (hauteur totale), les cartes représentatives des classes ordonnées pour une bibliothèque de cartes de la propriété HU (hauteur utile), et les cartes représentatives des classes ordonnées pour une bibliothèque de cartes de la propriété PHIU (porosité utile).

Qui plus est, deux zones ou niveaux de réservoir (ou profondeurs de réservoir mesurées à partir de la surface du sol) sont étudiés dans le cas présenté en figure 6. Ces deux niveaux de réservoir sont notés R1B et R1C. Deux bibliothèques sont donc préparées pour chaque propriété, les cartes de la première bibliothèque figurant la propriété à la profondeur du niveau R1B, et les cartes de la deuxième bibliothèque figurant la propriété à la profondeur R1C. Le nombre de profondeurs peut naturellement être plus grand que deux, et il y a dans ce cas autant de bibliothèques par propriété que de profondeurs étudiées.

Chacune des bibliothèques fait l'objet, indépendamment des autres, d'une classification organisée sur deux axes i,j, et les cartes représentatives des classes peuvent être visualisées par un géologue pour éliminer les classes non réalistes. Une fonction objectif prenant en variables les coordonnées i,j de chacune des classifications de bibliothèques de cartes, soit en figure 6, six couples i,j, est ensuite optimisée pour déterminer des cartes, extraites ou calculées à partie des cartes représentatives des classes pour chaque classification de bibliothèque.

La réalisation de réservoir retenue pour modéliser celui-ci est ensuite une combinaison des cartes retenues. La combinaison des cartes de deux niveaux réservoir différent est une juxtaposition, alors que la combinaison des cartes de deux propriétés différentes pour un même niveau de réservoir est une superposition des cartes.

Comme évoqué précédemment, des paramètres numériques P1, P2, P3 et P4 non représentés sur des cartes peuvent aussi être utilisés comme variables de la fonction objectif, et celle-ci peut être minimisée en faisant varier non seulement les couples i,j de coordonnées de classes dans les classifications de cartes, mais aussi les paramètres P1, P2... P4. Ainsi, on a représenté en **figure 8**, le processus d'optimisation utilisant six bibliothèques de cartes classifiées et 15 paramètres hors des cartes, ce qui définit un ensemble de 21 paramètres à faire varier pour optimiser la fonction objectif.

L'optimisation de la fonction objectif est faite, dans une variante, en imposant une corrélation minimale entre au moins deux propriétés différentes du réservoir, par exemple les propriétés HU et PHIU de la figure 7.

L'invention ne se limite pas aux modes de réalisation décrits mais s'étend à toutes les variantes dans le cadre de la portée des revendications.

## Revendications

1. Méthode de détermination d'un modèle calé pour un réservoir souterrain de fluide comprenant,
- une étape de génération (S100) d'une bibliothèque (100) de représentations graphiques décrivant le réservoir pour des réalisations différentes de celui-ci,
- une étape de classification (S200) des représentations graphiques de la bibliothèque dans un espace (200) de classes organisées sur au moins une dimension,
- et une étape d'optimisation (S300) d'une fonction objectif au moins dans ledit espace de classes, pour déterminer une réalisation (300) du réservoir calée sur des mesures d'exploitation (ME), **caractérisée en ce que**
l'étape de classification est une étape de classification auto-organisatrice.

2. Méthode de détermination selon la revendication 1, comprenant de plus une étape d'extraction d'un attribut pour des représentations graphiques de la bibliothèque, la classification étant faite sur la base d'au moins l'attribut.

3. Méthode de détermination selon la revendication 1 ou la revendication 2, dans laquelle l'optimisation est faite en calculant la fonction objectif pour une classe en utilisant une représentation graphique représentative de la classe.

4. Méthode de détermination selon l'une des revendications 1 à 3, dans laquelle, entre l'étape de classification et l'étape d'optimisation, la possibilité d'éliminer une ou plusieurs classes apparaissant comme non réalistes par observation visuelle d'au moins une représentation graphique représentative de chaque classe est offerte à un opérateur.

5. Méthode de détermination selon l'une des revendications 1 à 4, dans laquelle la classification est effectuée sur deux dimensions ou sur plus de deux dimensions.

6. Méthode de détermination selon l'une des revendications 1 à 5, dans laquelle la fonction objectif est optimisée sur un ou plusieurs paramètres qui sont des nombres réels non dépendants directement des cartes, et sur de coordonnées des classes de cartes sur la au moins une dimension.

7. Méthode de détermination selon l'une des revendications 1 à 6, dans laquelle plusieurs bibliothèques de représentations graphiques sont générées, les représentations graphiques de chaque bibliothèque faisant l'objet, indépendamment, de classifications auto-organisatrices dans des espaces de classes respectifs, et la fonction objectif étant optimisée dans des espaces de classes respectifs, une combinaison de représentations graphiques représentatives des classes optimisant la fonction étant utilisée pour la détermination de la réalisation calée.

8. Méthode de détermination selon la revendication 7, dans laquelle des bibliothèques de représentations graphiques portant sur des zones distinctes du réservoir sont générées, la fonction objectif étant optimisée dans les espaces de classes comprenant lesdites bibliothèques.

9. Méthode de détermination selon la revendication 7 ou la revendication 8, dans laquelle des bibliothèques de représentations graphiques portant sur des propriétés distinctes du réservoir sont générées, la fonction objectif étant optimisée dans les espaces de classes comprenant lesdites bibliothèques.

10. Méthode de détermination selon la revendication 9, dans laquelle l'optimisation de la fonction objectif est faite en imposant une corrélation minimale entre au moins deux propriétés différentes du réservoir décrites dans deux bibliothèques différentes.

11. Méthode de détermination selon l'une des revendications 1 à 10, dans laquelle les représentations graphiques comprennent des cartes représentant une propriété dans un plan du réservoir

12. Méthode de détermination selon l'une des revendications 1 à 11, dans laquelle les représentations graphiques comprennent des représentations d'au moins une propriété le long d'un rayon du réservoir, celui-ci étant considéré avoir une symétrie de révolution autour d'un axe vertical.

13. Méthode de détermination selon l'une des revendications 1 à 12, dans laquelle, l'optimisation est faite sur des coordonnées discrètes des classes.

14. Méthode de détermination selon l'une des revendications 1 à 13, dans laquelle l'optimisation est faite sur des coordonnées continues dans l'espace des classes, en interpolant des représentations graphiques représentatives des classes.

15. Méthode de détermination selon la revendication 1 à 14, avec une bibliothèque comprenant au moins des cartes obtenues par simulations géostatistiques, des cartes obtenues par modélisation stochastique non géostatistique, ou au moins des cartes obtenues par interprétation déterministe, ou au moins des cartes obtenues par une première de ces méthodes et des cartes obtenues par une deuxième de ces méthodes, ou au moins des cartes obtenues par respectivement chacune des trois méthodes.

16. Méthode de détermination selon l'une des revendications 1 à 15, la propriété comprenant la porosité, la perméabilité, la hauteur, la profondeur ou le faciès géologique.

## Patentansprüche

1. Verfahren zur Bestimmung eines abgestimmten Modells für einen unterirdischen Fluidbehälter, umfassend
- einen Schritt zur Erzeugung (S100) einer Bibliothek (100) von graphischen Darstellungen, die den Behälter für unterschiedliche Ausführungen von diesem beschreiben,
- einen Schritt zur Klassifizierung (S200) der graphischen Darstellungen der Bibliothek in einem Raum (200) von in wenigstens einer Dimension eingerichteten Klassen, und
- einen Schritt zur Optimierung (S300) einer objektiven Funktion wenigstens in dem Raum von Klassen, um eine Ausführung (300) des Behälters, welche auf Betriebsmessungen (ME) abgestimmt ist, zu bestimmen, **dadurch gekennzeichnet, dass** der Klassifizierungsschritt ein selbst organisierender Klassifizierungsschritt ist.

2. Bestimmungsverfahren nach Anspruch 1, zudem umfassend einen Schritt zur Extraktion eines Attributs für graphische Darstellungen der Bibliothek, wobei die Klassifizierung auf der Basis wenigstens des Attributs erfolgt.

3. Bestimmungsverfahren nach Anspruch 1 oder Anspruch 2, bei dem die Optimierung durch Berechnen der objektiven Funktion für eine Klasse unter Verwendung einer für die Klasse repräsentativen graphischen Darstellung erfolgt.

4. Bestimmungsverfahren nach einem der Ansprüche 1 bis 3, bei dem zwischen dem Klassifizierungsschritt und dem Optimierungsschritt einer Bedienungsperson die Möglichkeit des Entfernens von einer oder mehreren Klassen, die durch visuelle Betrachtung wenigstens einer für jede Klasse repräsentativen graphischen Darstellung als nicht realistisch erscheinen, geboten wird.

5. Bestimmungsverfahren nach einem der Ansprüche 1 bis 4, bei dem die Klassifizierung in wenigstens zwei Dimensionen oder in mehr als zwei Dimensionen durchgeführt wird.

6. Bestimmungsverfahren nach einem der Ansprüche 1 bis 5, bei dem die objektive Funktion anhand eines oder mehrerer Parameter, die von den Karten nicht direkt abhängige reelle Zahlen sind, und anhand von Koordinaten der Klassen von Karten in der wenigstens einen Dimension optimiert wird.

7. Bestimmungsverfahren nach einem der Ansprüche 1 bis 6, bei dem mehrere Bibliotheken von graphischen Darstellungen erzeugt werden, wobei die graphischen Darstellungen einer jeden Bibliothek unabhängig Gegenstand von selbst organisierenden Klassifikationen in jeweiligen Klassenräumen sind, und wobei die objektive Funktion in jeweiligen Klassenräumen optimiert wird, wobei eine Kombination von graphischen Darstellungen, die für die die Funktion optimierenden Klassen repräsentativ sind, für die Bestimmung der abgestimmten Ausführung verwendet wird.

8. Bestimmungsverfahren nach Anspruch 7, bei dem Bibliotheken von graphischen Darstellungen, welche unterschiedliche Bereiche des Behälters betreffen, erzeugt werden, wobei die objektive Funktion in den die Bibliotheken umfassenden Klassenräumen optimiert wird.

9. Bestimmungsverfahren nach Anspruch 7 oder Anspruch 8, bei dem Bibliotheken von graphischen Darstellungen, welche unterschiedliche Eigenschaften des Behälters betreffen, erzeugt werden, wobei die objektive Funktion in den die Bibliotheken umfassenden Klassenräumen optimiert wird.

10. Bestimmungsverfahren nach Anspruch 9, bei dem die Optimierung der objektiven Funktion dadurch erfolgt, dass eine minimale Korrelation zwischen wenigstens zwei unterschiedlichen Eigenschaften des Behälters, die in zwei verschiedenen Bibliotheken beschrieben sind, auferlegt wird.

11. Bestimmungsverfahren nach einem der Ansprüche 1 bis 10, bei dem die graphischen Darstellungen Karten umfassen, die eine Eigenschaft in einer Ebene des Behälters darstellen.

12. Bestimmungsverfahren nach einem der Ansprüche 1 bis 11, bei dem die graphischen Darstellungen Darstellungen von wenigstens einer Eigenschaft entlang eines Radius des Behälters umfassen, wobei dieser als eine Rotationssymmetrie um eine vertikale Achse aufweisend betrachtet wird.

13. Bestimmungsverfahren nach einem der Ansprüche 1 bis 12, bei dem die Optimierung anhand von diskreten Koordinaten der Klassen vollzogen wird.

14. Bestimmungsverfahren nach einem der Ansprüche 1 bis 13, bei dem die Optimierung anhand von kontinuierlichen Koordinaten in dem Raum der Klassen unter Interpolieren von für die Klassen repräsentativen graphischen Darstellungen vollzogen wird.

15. Bestimmungsverfahren nach Anspruch 1 bis 14, mit einer Bibliothek, die wenigstens Karten, welche durch geostatistische Simulation erhalten werden, Karten, welche durch nicht geostatistische, stochastische Modellierung erhalten werden, oder wenigstens Karten, welche durch deterministische Interpretation erhalten werden, oder wenigstens Karten, welche durch ein erstes dieser Verfahren erhalten werden und Karten, welche durch ein zweites dieser Verfahren erhalten werden, oder wenigstens Karten, welche durch jeweils eine jede der drei Verfahren erhalten werden, umfasst.

16. Bestimmungsverfahren nach einem der Ansprüche 1 bis 15, wobei die Eigenschaft die Porosität, die Durchlässigkeit, die Höhe, die Tiefe oder die geologische Fazies umfasst.

## Claims

1. A method for defining a calibrated model for an underground fluid reservoir, comprising:
- a step (S100) of generating a library (100) of graphic representations describing the reservoir for different embodiments thereof,
- a step (S200) of classifying graphic representations of the library in a space (200) of classes organized in at least one dimension, and
- a step (S300) of optimizing an objective function at least in said space of classes, to define an embodiment (300) of the reservoir calibrated on operating measurements (ME), **characterized in that** the classification step is a self-organizing classification step.

2. The defining method according to claim 1, also comprising a step for extracting an attribute for graphic representations of the library, the classification being done based on at least one attribute.

3. The defining method according to claim 1 or claim 2, wherein the optimization is done by calculating the objective function for a class by using a graphic representation representative of the class.

4. The defining method according to one of steps 1 to 3, wherein, between the classification step and the optimization step, the operator is offered the possibility of eliminating one or several classes appearing to be unrealistic by visual observation of at least one graphic representation representative of each class.

5. The defining method according to one of claims 1 to 4, wherein the classification is done in two dimensions or in more than two dimensions.

6. The defining method according to one of claims 1 to 5, wherein the objective function is optimized on one or several parameters that are real numbers not directly depending on the maps, or coordinates of map classes in the at least one dimension.

7. The defining method according to one of claims 1 to 6, wherein several libraries of graphic representations are generated, the graphic representations of each library being subject, independently, to self-organizing classifications in respective class spaces, and the objective function being optimized in respective class spaces, a combination of graphic representations representative of the classes optimizing the function being used to determine the calibrated embodiment.

8. The defining method according to claim 7, wherein libraries of graphic representations pertaining to separate zones of the reservoir are generated, the objective function being optimized in the class spaces comprising said libraries.

9. The defining method according to claim 7 or claim 8, wherein the libraries of graphic representations pertaining to separate properties of the reservoir are generated, the objective function being optimized in the class spaces comprising said libraries.

10. The defining method according to claim 9, wherein the optimization of the objective function is done by imposing a minimal correlation between at least two different properties of the reservoir described in two different libraries.

11. The defining method according to one of claims 1 to 10, wherein the graphic representations comprise maps representing a property in a plane of the reservoir.

12. The defining method according to one of claims 1 to 11, wherein the graphic representations comprise representations of at least one property along a radius of the reservoir, the latter being considered to have a symmetry of revolution around a vertical axis.

13. The defining method according to one of claims 1 to 12, where the optimization is done on discrete coordinates of the classes.

14. The defining method according to one of claims 1 to 13, wherein the optimization is done on continuous coordinates in the space of the classes, by interpolating graphic representations representative of the classes.

15. The defining method according to claim 1 to 14, with a library comprising at least maps obtained by geostatic simulations, maps obtained by non-geostatic stochastic modeling, or at least maps obtained by deterministic interpretation, or at least maps obtained by a first of these methods and maps obtained by a second of these methods, or at least maps obtained by each of the three methods, respectively.

16. The defining method according to one of claims 1 to 15, the property comprising the porosity, permeability, height, depth or geological facies.
